Europäisches Patentamt

**European Patent Office**

**Office européen des brevets**

(19)

(11) Publication number: **0 113 537**
A1

(12) # EUROPEAN PATENT APPLICATION

(21) Application number: **83307360.4**

(22) Date of filing: **02.12.83**

(51) Int. Cl.³: **B 05 D 1/02**
**B 05 D 1/04, B 05 D 7/26**

(30) Priority: **13.12.82 GB 8235421**
**11.03.83 GB 8306744**

(43) Date of publication of application:
**18.07.84 Bulletin 84/29**

(84) Designated Contracting States:
**BE DE FR GB IT NL SE**

(71) Applicant: **WILLETT INTERNATIONAL LIMITED**
**Dawson House 24, Ladbrooke Road**
**Chalvey Slough, SL1 2SR(GB)**

(72) Inventor: **Ball, Jeffrey Maurice**
**5 Mayville Drive**
**Didsbury Manchester 20(GB)**

(74) Representative: **Dummett, Thomas Ian Peter**
**7 Hasketon Road**
**Woodbridge Suffolk IP12 4JT(GB)**

(54) **Method of applying an adhesive composition.**

(57) A composition which comprises a dispersion of a particulate polymeric material in a fluid carrier, having a solids content of more than 30% by weight, a solids primary particle size of not more than 10 microns, a viscosity of not more than 120 centipoise at 25ᶜ C, and optionally a conductivity of more than 1000 micro Siemens is applied in droplet form (7) to a substrate (14) via one or more nozzle orifices (6).

Fig. 1.

EP 0 113 537 A1

Croydon Printing Company Ltd

TIP/94/1                         -1-

TITLE:ADHESIVE COMPOSITIONS AND METHOD.

The present invention relates to adhesive compositions and to a method for applying them to a substrate.

Present methods for applying adhesives to a substrate involve brush, roller or dip coating of the adhesive onto the substrate or spray application. However, such methods do not give accurate placement or accurate control of the amount of the adhesive applied.

Methods are known for applying printing inks to a substrate in which individual droplets of the ink are ejected from a nozzle onto the substrate. This can be done by applying ink under pressure to the nozzle via a suitable valve and spraying it in the desired pattern onto the substrate. Alternatively, the ink is ejected through the nozzle by pulsed pressure to form a stream of individual droplets. These droplets are electrically charged and are passed through one or more pairs of deflector plates whereby the flight path of the droplets is controlled by varying the charge on the droplets and/or the charge on the deflector plates. The position at which the droplets strike the substrate can thus be accurately controlled. For convenience these methods for applying ink to a substrate are denoted herein as "such methods".

The physical requirements for an adhesive composition are contradictory to those required for successful operation of such methods.  For such methods, the ink is typically substantially free from solids, usually it contains less than 20% by weight solids, and is free flowing; so as to reduce the risk of blockage of the nozzle.  On the other hand, adhesives are typically dispersions or suspensions of solids in a liquid carrier and are thickened to suit the application method.  This requires that the adhesive have a viscosity typically in excess of 800 cps at 25° C.

Surprisingly, we have found that it is possible to apply solid dispersion adhesives using such methods provided that the adhesives have certain physical characteristics. One of such characteristics is that the adhesive composition has a much lower viscosity than has hitherto be considered necessary.

Accordingly, the present invention provides a method for applying a film forming adhesive composition to a substrate, which method comprises applying the composition in droplet form to a substrate via one or more nozzles characterised in that the discharge of the composition through the nozzle is regulated to apply a predetermined amount of the composition at a predetermined location on the substrate; and in that the composition comprises a dispersion of a particulate polmeric material in a fluid carrier, the composition having a solids content of more than 30% by weight, a solids primary particle size of not more than 10 microns, a viscosity of not more than 120 centipoise at 25° C and, preferably, an electrical conductivity of at least 1000 micro siemens.

The invention also provides a film forming adhesive composition for use in the method of the invention characterised in that it comprises a dispersion of a particulate polmeric material in a fluid carrier, the composition having a solids content of more than 30% by weight, a solids primary particle size of not more than 10 microns, a viscosity of not more than 120 centipoise at 25° C and, preferably, an electrical conductivity of at least 1000 micro siemens.

Surprisingly, we have found that the composition of the invention still acts as an adhesive even though it has a much lower viscosity than has hitherto been considered necessary for an adhesive; and that despite its high solids content the composition can be applied using such methods without the nozzle blockage problems that would have been expected from the use of a dispersion as the material to be dispensed. By using such methods to apply the composition it is possible to achieve more accurate control over the placement and amount of the adhesive applied to the substrate. Since the adhesive is applied in the form of droplets, drying of the composition on the substrate is enhanced as compared to the drying of the comparatively thick coatings achieved hitherto.

The composition of the invention comprises a solid particulate polymeric material dispersed in a fluid carrier. The term dispersion is used herein to denote in general terms any composition containing solid particles in a liquid phase and includes suspensions and colloidal dispersions as well as dispersions of non-colloidal particles. Typically, the solid particles will have a maximum primary particle size, that is the size of the individual particles of the material, of from 1 to 3, e.g. 1.5 microns. Preferably, the mass median particle size of the particulate material will be in the range 0.1 to 0.5, notably 0.1 to 0.3, microns.

The solid particulate material comprises a natural or synthetic material, but may also comprise a minor proportion of other materials, for example undissolved particles of one or more of the other ingredients in the composition. The polymeric materials for present use are preferably synthetic ethylenically unsaturated polmers, such as vinylic polymers. The polymer can be a homopolymer, eg. polyvinyl chloride, vinylidene dichloride, polyvinylacetate, a polyurethane, a polystyrene and the like; a co-polymer, eg. of vinyl acetate, vinyl acrylic, acrylonitrile, acrylic acid and esters thereof and vinyl chloride; or a ter-polmer, eg that obtained from acrylonitile, butadiene and styrene. The polmeric material can also be a blend or physical mixture of polmers if desired.  Particularly preferred polymers for present use are polyvinylacetate, polyvinylacrylamide, polyacrylic and esters thereof and co-polymers of vinylacetate, ethylene and/or vinyl chloride.

The composition comprises the solids in a liquid carrier medium.  Preferably, this is aqueous, notably de-ionised water since we have found that de-ionised water aids the stability of the dispersion.  If desired, an organic solvent or carrier, such as an alkanol, a ketone, cyclohexane, benzene or an halogenated hydrocarbon may be used, eg. in combination with the water carrier to aid drying of the adhesive composition once it has been applied to the target substrate.  For convenience, the invention will be described hereinafter in terms of aqueous compositions.  The carrier may contain ingredients of the composition, eg. surface active agents or anti-foaming agents, such as ethanolamine, dissolved therein.

The composition contains not less than 30% by weight of solids.  The upper limit for the solids content will depend upon the method of applying the composition to the substrate and the particle size of the solids, since these will affect the optimum viscosity of the composition.  However, it is preferred that the composition contain from 40 to 60% by weight of solids, typically about 50% to 55%.

The viscosity of the composition is measured using a Brookfield LVF viscometer with a UL adaptor and preferably lies in the range 5 to 80, notably 10 to 50, cps at 25° C. If necessary, the viscosity of an otherwise acceptable composition can be adjusted by diluting the composition or by adding one or more surface active agents; or by adding a thickening agent, eg. a polyacrylamide.

It is also preferred that the composition have a surface tension of not more than 50, eg. 30 to 45, dynes per square cm as measured using the De Nuys ring test. This will be affected by the solids content and the nature of the solids.

The composition of the invention can be applied through a spray nozzle directly onto the substrate. However, it is preferred that the droplets formed at the nozzle are electrically charged so that their line of flight can be adjusted to achieve control of the placement of the droplet on the substrate. It is therefore preferred that the composition have an electrical conductivity of at least 1000 micro siemens so that the droplets can be satisfactorily charged. Preferably the conductivity is in the range 1500 to 2500 micro siemens as measured using a conductivity cell. The desired conductivity can be achieved by the addition of ionic or chargeable materials, eg. carbon black, to the composition. Thus, ionic salts such as potassium,

**0113537**

sodium or ammonium chloride, fluoride, sulphate, thiocyanate and/or phosphate; salts of carboxylic acids, eg. oxalic, acetic or propionic acids; and sodium silicate can be added to achieve the desired conductivity level in the composition. In some cases, the polymer dispersions commercially available may already have the desired conductivity level due to salts present therein by virtue of their method of manufacture and/or formulation.

Typically, the compositions for present use will have a viscosity of from 10 to 40 cps and will contain from 40 to 60 parts by weight of a particulate acrylic polymer having a maximum primary particle size in the range 1 to 3 microns with a mass median particle size of from 0.1 to 0.3 microns; from 0.1 to 0.5 parts by weight of a non-ionic alkylene oxide condensate type surface active agent, notably a nonylphenolethoxylate; and 20 parts of water.

The compositions for present use can contain other ingredients, such as humectants, preservatives and anti-foaming agents, conventionally used in adhesive formulations.

The compositions can be made by dry or wet mixing the ingredients together. Typically the polymeric material is commercially available as a dispersion in water, optionally containing a surface active agent and ionic salts; and the other desired ingredients are admixed with that dispersion. If desired, the mixture can be subjected to comminution or high shear working techniques to breakdown any agglomerates and/or to reduce the particle size of the polymeric material therein. This working may modify the viscosity of the composition and the viscosity figures quoted herein are for the composition as ready to be dispensed through the nozzles of such devices. ·The composition is preferably filtered before use to remove any agglomerates which may form during storage.

The compositions of the invention can be applied to a substrate using such methods as described in outline earlier. The substrate can be a paper, cardboard, plastics or other sheet material; a container, eg. a box, plastics bag or other package; or a label to be applied to a package or the like. The substrate is typically a cellulosic material, but the invention can be applied to any other substrate where it is desired to apply an adhesive, eg. sheet metal or plastics, or to woodwork. The invention enables the adhesive to be applied in accurately defined amounts and to accurately defined locations on a substrate.

The adhesive composition of the invention can be applied through one or more nozzles having bore diameters of from 25 to 400, preferably 70 to 185, microns and arranged in a bank fed with the composition under pressure, eg. at from 0.1 to 8 bar, via solenoid or other valves actuated in the desired sequence to produce the desired placement pattern of adhesive on the substrate which moves relative to the nozzle bank. The actuation of the valves can be controlled by a microprocessor to enable the placement pattern to be programed into a control system. A typical system is that described in our US Patent No 4378564.

A particularly preferred method for applying the adhesive is to form the composition into discrete droplets, to charge these droplets and to pass the charged droplets between charged deflector plates to control the line of flight of the droplets and hence the placement pattern of the droplets on the substrate. Thus, a nozzle can form a stream of the adhesive composition which is then broken up into substantially uniform sized droplets by pressure pulses. The pressure pulses can be obtained by applying a voltage to a piezoelectric crystal, eg. a bimorph or unimorph crystal, to cause a contraction in the volume of a chamber containing the adhesive.

The droplets of adhesive are charged by passing them through an electric field, eg. one formed by opposed electrodes, eg. plates, on either side of the line of flight of the droplets. The electrodes can induce a substantially uniform charge in each droplet; or the charge can be selectivley varied by altering the field between the electrodes.

The charged droplets then pass between two or more electrodes which act on the charged droplets to deflect them from their natural flight path. The extent and direction of deflection is dependant upon the combined repulsion or attraction resulting from the charges on the droplets and the defection electrodes. The droplets can be directed onto the substrate at all times during operation of the application device. However, it is preferred that the droplets are caught in a drain or gutter when they are not required to contact the substrate and are recycled to a reservoir for re-use. The drain or gutter can be placed so that droplets following their natural flight path will be trapped by the drain or gutter and it is necessary to charge and deflect the droplets in order for them to miss the drain or gutter and reach the substrate; or vice versa.

Two particularly preferred forms of apparatus for applying the adhesive compositions of the invention are shown in the accompanying drawings in which:

Figure 1 is a diagrammatic representation of a device incorporating a charged electrode system; and

Figure 2 is a diagrammatic representation of a system using multiple nozzles and valves.

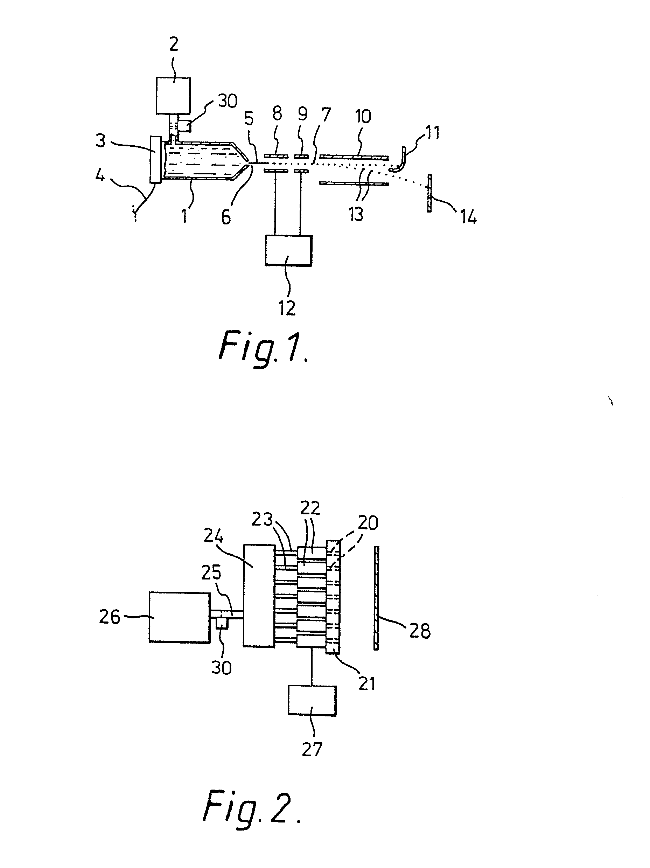

In the device of Figure 1 a nozzle 1 is fed with adhesive composition under pressure, typically 3 to 6 bar, from vessel 2. Typically, the adhesive composition piezoelectric bimorph crystal 3 which is flexed by the application of a voltage thereto via lead 4. The flexing of bimorph 3 causes the stream of adhesive 5 issuing from the orifice 6 of the nozzle to break up into substantially uniform sized droplets 7. Typically, orifice 6 is from 70 to 85 microns diameter and the droplets 7 are from 140 to 170 diameter.

The droplets 7 pass between a pair of charge plates 8, a pair of sensing electrodes 9 which feed signals to control unit 12 and a pair of deflecting electrodes 10 in their flight to a drain or gutter 11 which catches the droplets and returns them to vessel 2. Droplets 7 are selectively charged by plates 8 under the control of a microprocessor unit 12 to give droplets 13 carrying a charge to cause them to be deflected to the desired extent when they pass through the field between electrodes 10. These charged droplets are deflected to the desired extent by electrodes 10 and strike the substrate 14. Uncharged droplets pass between electrodes 10 without being deflected and are trapped by gutter 11.

In the device shown in Figure 2, a series of nozzles having a diameter of from 70 to 180 microns is fed with the adhesive used for the device of Figure 1. The nozzles 20 are mounted in a block 21 and the adhesive is fed to them from a pressurised vessel 26 via conduit 25 feeding manifold 24 connected by conduits 23 to the inlet ports of quick acting solenoid valves 22 serving each of the nozzles. The operation of valves 22 is controlled by unit 27 and the block 21 has the nozzles mounted to extend across the line of travel of the substrate 28.

The operation of the individual valves 20 is controlled by unit 27 so that adhesive is applied by the nozzles in time sequence to give the desired placement pattern of adhesive on the substrate 28.

With the devices of both Figures 1 and 2 it is desirable to place a filter 30 in the flow path of the adhesive from the pressurised vessel to the nozzle.

The following Examples are given by way of illustration of adhesive compositions of the invention suitable for use with the devices of Figures 1 and 2, all parts and percentages being given by weight unless stated otherwise:

Example I:

An adhesive mixture was prepared by mixing together 78 parts of the aqueous dispersion of the acrylate co-polymer available under the trade name Acronal $V_2O_5$ ( 70 % polmer content, polymer maximum particle size 1 micron, mean particle size 0.5 micron), 2 parts glycerol triacetate, 12 parts of aqueous potassium chloride (5% KCl content) and 0.1 parts of ethanolamine as anti-foam agent. The mixture was diluted with 7.9 parts of de-ionised water to give an adhesive with a viscosity of 30 cps, a solids content of 56.5% and a conductivity of 2300 micro siemens.

This adhesive composition was successfully applied to a paper substrate through the device of Figure 1 with a nozzle orifice of 183 microns at a rate of 24 g/minute with a pressure of 5 bar in vessel 2.

Comparison Example.

When a conventional adhesive formulation having a solids content of 55 %, a viscosity of 1300 cps and a conductivity of 2200 was used in the device of Figure 1, the nozzle clogged within 1 minute of starting to dispense the adhesive and the adhesive jet issuing from the nozzle orifice did not break up into individual droplets.

Example II:

The adhesive composition of Example I was replaced by one containing 70 parts of the polymer, 0.1 parts of the anti-foaming agent, 29.7 parts of de-ionised water and 0.2 parts of a nonylphenolethoxylate surface active agent. This composition had a viscosity of 12.5 cps, a solids content of 40% and a conductivity of 2000 micro siemens. The composition was applied successfully through the device used in Example 1 and through a 183 micron diameter nozzle under 0.14 bar pressure through a device as shown in Figure 2.

Examples III to

Adhesive compostion were formulated as in Example I using the polmers set out in Table 1 and had the properties stated in Table 1. All the compositions werre successfully applied to a substrate as in Example I.

TABLE 1

| Ex No: | Aqueous polymer dispersion: type: | total w/w | polymer w/w | Particle size: Max | Mean | Visc- sity in cps | Conduct ivity in ms | Solids % w/w | Other ingredients identity | w/w |
|---|---|---|---|---|---|---|---|---|---|---|
| III | Haloflex ) chlorine contg) acrylic co- ) polymer ) | 98 | 57 | 0.5μ | 0.2μ | 20 at 20.°C | 2900 | 57 | deionised water: antifoam agent: butyl cellusolve: | 0.9 0.1 1.0 |
| IV | polyvinyl acetate: acrylic: | 50) ) 47) | 43.5 | 1μ | 0.3μ | 48 at 20°C | 2100 | 43.5 | antifoam agent: deionised water: | 0.1 2.9 |
| V | V₂O₅acrylate: Haloflex co-polymer: | 35) ) 50) | 51 | 0.7μ | 0.2μ to 0.5μ | 12 at 20°C | 2200 | 51 | deionised water: ethoxylate: antifoam agent: | 14.2 0.1 0.1 |

**0113537**

CLAIMS:

1. A method for applying a film forming adhesive composition to a substrate, which method comprises applying the composition in droplet form to a substrate via one or more nozzles characterised in that the discharge of the composition through the nozzle is regulated to apply a predetermined amount of the composition at a predetermined location on the substrate; and in that the composition comprises a dispersion of a particulate polmeric material in a fluid carrier, the composition having a solids content of more than 30% by weight, a solids primary particle size of not more than 10 microns, a viscosity of not more than 120 centipoise at 25° C.

2. A film forming adhesive composition suitable for use in the method of claim 1 characterised in that it comprises a dispersion of a particulate polmeric material in a fluid carrier, the composition having a solids content of more than 30% by weight, a solids primary particle size of not more than 10 microns, a viscosity of not more than 120 centipoise at 25° C.

3. A method or composition according to either claim 1 or 2 characterised in that the composition has an electrical conductivity of at least 1000 micro siemens.

4. A method or composition as claimed in any one of the preceding claims characterised in that the maximum primary particle size is from 1 to 3 microns.

5.    A method or composition as claimed in any of the preceding claims characterised in that the composition comprises an aqueous dispersion.

6.    A method or composition as claimed in any of the preceding claims characterised in that the composition contains from 40 to 60% by weight of solids.

7.    A method or composition as claimed in any of the preceding claims characterised in that the composition has a viscosity of from 10 to 80 cps at 25°C.

8.    A method or composition as claimed in any of the preceding claims characterised in that the composition has a viscosity of from 10 to 40 cps at 25°C and contains: from 40 to 60 parts by weight of a solid particulate acrylate polymer having a maximum primary particle size in the range 1 to 3 microns with a mass median particle size of from 0.1 to 0.3 microns; from 0.1 to 0.5 parts by weight of a non-ionic alkylene oxide condensate type surface active agent; and 20 parts by weight of water.

9.    A method as claimed in claim 1 characterised in that the composition is applied through one or more nozzles having bore diameters of from 25 to 400 microns and fed with the composition under pressure via one or more valves actuated in the desired sequence to produce the desired placement pattern of the composition on a substrate which moves relative to the nozzle.

10. A method as claimed in claim 1 characterised in that the composition is formed into discrete droplets, these droplets are electrically charged and passed between charged deflector plates to control the line of flight of the droplets and hence the placement pattern of the droplets on the substrate.

*Fig.1.*

*Fig.2.*

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 036 296 (PRINTOS B.V.) <br><br> * Page 2, middle of the page - page 3, below; page 4, below - page 5, middle of the page - page 7, above; page 13, middle of the page * <br><br> --- | 1,2,5, 9,10 | B 05 D 1/02 <br> B 05 D 1/04 <br> B 05 D 7/26 |
| Y | US-A-4 313 968 (J.E. SICKLES) <br><br> * Column 1, line 53 - column 2, line 43; column 7, example 1; claims 1-10 * <br><br> --- | 1,2,3, 6,8,10 | |
| A | DE-A-1 796 280 (McMILLAN BLOEDEL) <br> * Page 6, below; claim 1 * <br><br> --- | 1 | |
| A | FR-A-2 227 139 (GROW CHEMICAL) <br><br> * Page 4, line 19 - page 6, line 34 * <br><br> --- | 1,2,5, 8 | TECHNICAL FIELDS SEARCHED (Int. Cl. 3) <br><br> B 05 D <br> F 41 J |
| A | FR-A-2 228 096 (ROHM & HAAS) <br> * Page 6, lines 23-27; page 8, lines 1-11; page 23, lines 8-22; page 25, lines 32-34 * <br><br> --- | 1,5,8 | |
| A | EP-A-0 036 297 (RPINTOS B.V.) <br> * Abstract * <br><br> --- -/- | 1,5,10 | |

The present search report has been drawn up for all claims

| Place of search | Date of completion of the search | Examiner |
|---|---|---|
| THE HAGUE | 19-03-1984 | FRIDEN N. |

0113537

Application number

EUROPEAN SEARCH REPORT

EP 83 30 7360

| | DOCUMENTS CONSIDERED TO BE RELEVANT | | Page 2 |
| --- | --- | --- | --- |

| Category | Citation of document with indication, where appropriate, of relevant passages | Relevant to claim | CLASSIFICATION OF THE APPLICATION (Int Cl. 3) |
| --- | --- | --- | --- |
| A,D | FR-A-2 483 267 (VIANOVA KUNSTHARZ AG) * Page 5, example * | 1,2,5 | |
| | | | TECHNICAL FIELDS SEARCHED (Int. Cl 3) |

The present search report has been drawn up for all claims

| Place of search | Date of completion of the search | Examiner |
| --- | --- | --- |
| THE HAGUE | 19-03-1984 | FRIDEN N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82